# EUROPÄISCHE PATENTANMELDUNG

(11) **EP 1 841 263 A1**
(43) Veröffentlichungstag der Anmeldung: **03.10.2007**
(21) Anmeldenummer: 07003953.2
(22) Anmeldetag: 27.02.2007
(51) Int. Cl.: H04Q 7/38, H04L 12/56

(54) **Kommunikationssystem und Verfahren für Gruppenkommunikationsanwendungen**

(30) Priorität: 27.03.2006 DE 102006014409
(71) Anmelder: Vodafone Holding GmbH, 40213 Düsseldorf (DE)
(72) Erfinder: Hertie, Jochen Dr., 85521 Ottobrunn (DE)
(74) Vertreter: Weisbrodt, Bernd

(57) **Zusammenfassung**

Die vorliegende Erfindung betrifft ein Kommunikationssystem für Gruppenkommunikationsanwendungen, vorzugsweise im Bereich von Behörden und/oder Organisationen mit Sicherheitsaufgaben, mit einem Mobilfunknetz (1), vorzugsweise gemäß dem GSM-, GPRS- und/oder UMTS-Funknetzstandard, und darin betreibbaren mobilen Endgeräten (4, 5, 7), welche zumindest zu Gruppenkommunikationszwecken mobilfunknetzseitig zusammenfassbar sind, wenigstens einer zentral verwalteten Datenbank (3) mit wenigstens eine Information zur Kontaktierung von mobilen Endgeräten (4, 5, 7) von möglichen Gruppenmitgliedern im Mobilfunknetz (1) aufweisenden Datenbankeinträgen und wenigstens einer Leitstelle (9) zur Zusammenstellung und/oder Koordination von Gruppenmitgliedern zu einer Gruppe. Zur Verbesserung des Umfangs und der Funktionalitäten von Gruppenkommunikationsanwendungen eines derartigen Kommunikationssystems, insbesondere hinsichtlich einer Gruppierung von Gruppenmitgliedern zu einer Gruppe und der entsprechenden Gruppenmitglieder einer Gruppe untereinander wird erfindungsgemäß vorgeschlagen, dass die Leitstelle (9) zumindest im Rahmen der Zusammenstellung von Gruppenmitgliedern zu einer Gruppe mit der Datenbank (3) verbindbar ist, eine leitstellenseitige Zusammenstellung von Gruppenmitgliedern zu einer Gruppe eine mobilfunknetzseitige Zusammenfassung der mobilen Endgeräte (4, 5, 7) der Gruppenmitglieder der Gruppe bewirkt und eine leitstellenseitige Zusammenstellung von Gruppenmitgliedern zu einer Gruppe bewirkt, dass dem mobilen Endgerät (4, 5, 7) zumindest eines Gruppenmitglieds der Gruppe zumindest ein Teil der Datenbankeinträge des mobilen Endgerätes (4, 5, 7) wenigstens eines weiteren Gruppenmitglieds der Gruppe zur Verfügung gestellt wird.

Gegenstand der vorliegenden Erfindung ist ferner ein Verfahren für Gruppenkommunikationsanwendungen, vorzugsweise im Bereich von Behörden und/oder Organisationen mit Sicherheitsaufgaben, mit einem Mobilfunknetz (1), vorzugsweise gemäß dem GSM-, GPRS- und/oder UMTS-Funknetzstandard, und darin betreibbaren mobilen Endgeräten (4, 5, 7), welche zumindest zu Gruppenkommunikationszwecken mobilfunknetzseitig zusammengefasst werden, wenigstens einer zentral verwalteten Datenbank (3) mit wenigstens eine Information zur Kontaktierung von mobilen Endgeräten (4, 5, 7) von möglichen Gruppenmitgliedern im Mobilfunknetz (1) aufweisenden Datenbankeinträgen und wenigstens einer Leitstelle (9), in der Gruppenmitglieder zu einer Gruppe zusammengestellt und/oder koordiniert werden, welches dadurch gekennzeichnet ist, dass zumindest im Rahmen der Zusammenstellung von Gruppenmitgliedern zu einer Gruppe die Leitstelle (9) mit der Datenbank (3) verbunden wird, die leitstellenseitige Zusammenstellung von Gruppenmitgliedern zu einer Gruppe eine mobilfunknetzseitige Zusammenfassung der mobilen Endgeräte (4, 5, 7) der Gruppenmitglieder der Gruppe bewirkt und die leitstellenseitige Zusammenstellung von Gruppenmitgliedern zu einer Gruppe bewirkt, dass dem mobilen Endgerät (4, 5, 7) zumindest eines Gruppenmitglieds der Gruppe zumindest ein Teil der Datenbankeinträge des mobilen Endgerätes (4, 5, 7) wenigstens eines weiteren Gruppenmitglieds der Gruppe zur Verfügung gestellt wird.

## Beschreibung

Die vorliegende Erfindung betrifft ein Kommunikationssystem für Gruppenkommunikationsanwendungen, vorzugsweise im Bereich von Behörden und/oder Organisationen mit Sicherheitsaufgaben, mit einem Mobilfunknetz, vorzugsweise gemäß dem GSM-, GPRS- und/oder UMTS-Funknetzstandard, und darin betreibbaren mobilen Endgeräten, welche zumindest zu Gruppenkommunikationszwecken mobilfunknetzseitig zusammenfassbar sind, wenigstens einer zentral verwalteten Datenbank mit wenigstens eine Information zur Kontaktierung von mobilen Endgeräten von möglichen Gruppenmitgliedem im Mobilfunknetz aufweisenden Datenbankeinträgen und wenigstens einer Leitstelle zur Zusammenstellung und/oder Koordination von Gruppenmitgliedern zu einer Gruppe.

Gegenstand der vorliegenden Erfindung ist ferner ein Verfahren für Gruppenkommunikationsanwendungen, vorzugsweise im Bereich von Behörden und/oder Organisationen mit Sicherheitsaufgaben, mit einem Mobilfunknetz, vorzugsweise gemäß dem GSM-, GPRS- und/oder UMTS-Funknetzstandard, und darin betreibbaren mobilen Endgeräten, welche zumindest zu Gruppenkommunikationszwecken mobilfunknetzseitig zusammengefasst werden, wenigstens einer zentral verwalteten Datenbank mit wenigstens eine Information zur Kontaktierung von mobilen Endgeräten von möglichen Gruppenmitgliedern im Mobilfunknetz aufweisenden Datenbankeinträgen und wenigstens einer Leitstelle, in der Gruppenmitglieder zu einer Gruppe zusammengestellt und/oder koordiniert werden.

Im Umfeld von Gruppenkommunikationsanwendungen im Bereich von Behörden und/oder Organisationen mit Sicherheitsaufgaben, sogenannten BOS-Anwendungen, sind verschiedene Kommunikationssysteme, Endgeräte und insbesondere Verfahren zu deren Betrieb bekannt, beispielsweise aus der EP 0 675 660 B1 oder der EP 0 750 826 B1, insbesondere im Zusammenhang mit dem sogenannten TETRA-Standard (TErrestrial Trunked RAdio-Standard).

BOS-Anwendungen sind seitens öffentlicher Organisationen als auch im Bereich privater Unternehmen gegeben, beispielsweise bei der Polizei, der Feuerwehr, im Rettungsdienst, im Katastrophenschutz, im Bereich des Werkschutzes von Unternehmen, im Bereich von Anwendungen im Bergbau, im Bereich von Anwendungen seitens Transportunternehmen und/oder dergleichen.

Nachteilig bei den bisher bekannten Gruppenkommunikationsanwendungen sind insbesondere Beschränkungen hinsichtlich deren Funktionalitäten und/oder Anwendungsumfangs, insbesondere hinsichtlich einer Gruppierung von Gruppenmitgliedern zu einer Gruppe.

Der Erfindung liegt in Anbetracht dieses Standes der Technik die Aufgabe zugrunde, die Funktionalitäten und den Umfang von Gruppenkommunikationsanwendungen zu verbessern, insbesondere hinsichtlich einer Gruppierung von Gruppenmitgliedern zu einer Gruppe und der entsprechenden Gruppenmitglieder einer Gruppe untereinander.

Zur technischen Lösung wird mit der vorliegenden Erfindung ein Kommunikationssystem für Gruppenkommunikationsanwendungen, vorzugsweise im Bereich von Behörden und/oder Organisationen mit Sicherheitsaufgaben, mit einem Mobilfunknetz, vorzugsweise gemäß dem GSM-, GPRS- und/oder UMTS-Funknetzstandard, und darin betreibbaren mobilen Endgeräten, welche zumindest zu Gruppenkommunikationszwecken mobilfunknetzseitig zusammenfassbar sind, wenigstens einer zentral verwalteten Datenbank mit wenigstens eine Information zur Kontaktierung von mobilen Endgeräten von möglichen Gruppenmitgliedern im Mobilfunknetz aufweisenden Datenbankeinträgen und wenigstens einer Leitstelle zur Zusammenstellung und/oder Koordination von Gruppenmitgliedern zu einer Gruppe, vorgeschlagen, bei dem die Leitstelle zumindest im Rahmen der Zusammenstellung von Gruppenmitgliedern zu einer Gruppe mit der Datenbank verbindbar ist, eine leitstellenseitige Zusammenstellung von Gruppenmitgliedern zu einer Gruppe eine mobilfunknetzseitige Zusammenfassung der mobilen Endgeräte der Gruppenmitglieder der Gruppe bewirkt und eine leitstellenseitige Zusammenstellung von Gruppenmitgliedern zu einer Gruppe bewirkt, dass dem mobilen Endgerät zumindest eines Gruppenmitglieds der Gruppe zumindest ein Teil der Datenbankeinträge des mobilen Endgerätes wenigstens eines weiteren Gruppenmitglieds der Gruppe zur Verfügung gestellt wird.

Erfindungsgemäß bewirkt eine leitstellenseitige Zusammenstellung von Gruppenmitgliedern zu einer Gruppe, dass seitens des mobilen Endgerätes eines Gruppenmitglieds zumindest ein Teil der wenigstens eine Information zur Kontaktierung von mobilen Endgeräten von Gruppenmitgliedem der Gruppe aufweisenden Datenbankeinträge des mobilen Endgerätes eines weiteren Gruppenmitglieds der Gruppe zur Verfügung gestellt werden.

Der Erfindung liegt die Erkenntnis zugrunde, dass eine Steigerung des Umfangs und der Funktionalitäten von Gruppenkommunikationsanwendungen insbesondere hinsichtlich einer Gruppierung von Gruppenmitgliedern zu einer Gruppe und der entsprechenden Gruppenmitglieder einer Gruppe untereinander erzielbar ist, wenn den Gruppenmitgliedern einer Gruppe weitergehende Informationen weiterer Gruppenmitgliedern der Gruppe zur Verfügung stehen.

Eine weitere vorteilhafte Ausgestaltung des erfindungsgemäßen Kommunikationssystems ist dadurch gekennzeichnet, dass die zur Verfügungsstellung des zumindest einen Teils der Datenbankeinträge des mobilen Endgerätes des wenigstens einen weiteren Gruppenmitglieds der Gruppe dem mobilen Endgerät des zumindest einen Gruppenmitglieds der Gruppe durch über das Mobilfunknetz erfolgende Übertragung des zumindest einen Teils der Datenbankeinträge des mobilen Endgerätes des wenigstens einen weiteren Gruppenmitglieds der Gruppe an das mobile Endgerät des zumindest einen Gruppenmitglieds der Gruppe und Speicherung seitens des mobilen Endgerätes des zumindest einen Gruppenmitglieds der Gruppe erfolgt.

Vorteilhafterweise wird die vorzugsweise durch Übertragung und/oder Speicherung des zumindest einen Teils der Datenbankeinträge des mobilen Endgerätes des wenigstens einen weiteren Gruppenmitglieds der Gruppe erfolgende zur Verfügungsstellung des zumindest einen Teils der Datenbankeinträge des mobilen Endgerätes des wenigstens einen weiteren Gruppenmitglieds der Gruppe durch die Leitstelle initiiert.

In einer weiteren vorteilhaften Ausgestaltung der Erfindung erfolgt die Übertragung und/oder Speicherung der Datenbankeinträge automatisch. Hierzu werden vorteilhafterweise mit und/oder nach leitstellenseitiger Zusammenstellung von Gruppenmitgliedern zu einer Gruppe entsprechende Datenbankeinträge der zentral verwalteten Datenbank über das Mobilfunknetz an die mobilen Endgeräte der Gruppenmitglieder der Gruppe übertragen und seitens derselben selbstständig gespeichert. Zur selbstständigen Speicherung der Datenbankeinträge seitens der mobilen Endgeräte ist dazu seitens derselben vorteilhafterweise ein Anwendungsprogramm vorgesehen, welches von der Leitstelle übertragene Datenbankeinträge automatisch in einen Speicherbereich des mobilen Endgerätes und/oder seitens eines von diesen genutzten Mobilfunkteilnehmer-Identifikationsmoduls (SIM-Karte) zur weitergehenden Nutzung speichert. Entsprechend gespeicherte Datenbankeinträge sind vorteilhafterweise von der entsprechenden Anwendung mit beziehungsweise nach der Auflösung einer entsprechenden Gruppe automatisch löschbar.

Gemäß einer weiteren Ausgestaltung der Erfindung ist die Information zur Kontaktierung von mobilen Endgeräten von Gruppenmitgliedern im Mobilfunknetz die Mobilfunknetzrufnummer, die sogenannte MSISDN.

In einer weiteren bevorzugten Ausgestaltung der Erfindung umfassen die Datenbankeinträge neben der wenigstens einen Information zur Kontaktierung von mobilen Endgeräten von möglichen Gruppenmitgliedern im Mobilfunknetz beziehungsweise Gruppenmitgliedern einer Gruppe im Mobilfunknetz wenigstens eine Funktions- und/oder Statusinformation des jeweiligen möglichen Gruppenmitglieds einer Gruppe beziehungsweise des Gruppenmitglieds einer Gruppe. So können vorteilhafterweise seitens der Leitstelle Gruppenmitglieder entsprechend ihrer jeweiligen Qualifikation und/oder dergleichen Expertise zu einer Gruppe zusammengestellt werden, vorteilhafterweise im Hinblick auf die Anforderungen eines jeweils möglichen Einsatzes. In einer weiteren vorteilhaften Ausgestaltung der Erfindung umfasst der dem mobilen Endgerät des zumindest einen Gruppenmitglieds der Gruppe zumindest zur Verfügung gestellte Teil der Datenbankeinträge des mobilen Endgerätes des wenigstens einen weiteren Gruppenmitglieds der Gruppe wenigstens eine Information der Gruppe, eine Information der Leitstelle der Gruppe und/oder eine Information zur Kontaktierung der Leitstelle der Gruppe. Durch die entsprechende Ausgestaltung ist erfindungsgemäß eine weitere Steigerung hinsichtlich des Funktions- und Anwendungsumfangs erzielbar.

Eine weitere vorteilhafte Ausgestaltung der Erfindung sieht vor, dass zusätzlich zu dem dem mobilen Endgerät des zumindest einen Gruppenmitglieds der Gruppe zumindest zur Verfügung gestellten Teils der Datenbankeinträge des mobilen Endgerätes des wenigstens einen weiteren Gruppenmitglieds der Gruppe dem mobilen Endgerät des zumindest einen Gruppenmitglieds der Gruppe zusätzlich wenigstens eine Information der Gruppe, eine Information der Leitstelle der Gruppe und/oder eine Information zur Kontaktierung der Leitstelle der Gruppe zur Verfügung gestellt wird, wobei die zur Verfügungsstellung vorteilhafterweise von der Leitstelle her erfolgt beziehungsweise initiiert wird. Durch die entsprechende Ausgestaltung des erfindungsgemäßen Kommunikationssystems ist vorteilhafterweise eine weitere Steigerung hinsichtlich des Anwendungsumfangs und/oder der Funktionalitäten für Gruppenkommunikationsanwendungen erzielbar.

In einer weiteren vorteilhaften Ausgestaltung der Erfindung wird zumindest bei seitens eines Gruppenmitglieds der Gruppe eingehendem Anruf eines weiteren Gruppenmitglieds der Gruppe zumindest ein Teil des Datenbankeintrags des anrufenden Gruppenmitglieds der Gruppe seitens des mobilen Endgerätes des angerufenen Gruppenmitglieds der Gruppe wiedergegeben. Erfindungsgemäß kann so das angerufene Gruppenmitglied seitens seines mobilen Endgerätes beispielsweise unmittelbar erkennen, wer anruft und welche Funktion der Anrufer innerhalb der Gruppe hat. Darüber hinaus kann vorteilhafterweise seitens des mobilen Endgerätes wiedergegeben werden, wo sich der Anrufer befindet beziehungsweise mit welchen Aufgaben er in der Gruppe beauftragt ist.

In einer weiteren vorteilhaften Ausgestaltung der Erfindung wird eine von einem mobilen Endgerät eines Gruppenmitglieds einer Gruppe über das Mobilfunknetz an die Leitstelle der Gruppe gesendete Kommunikationsnachricht, vorzugsweise eine SMS oder eine MMS, über das Mobilfunknetz an die mobilen Endgeräte der übrigen Gruppenmitglieder der Gruppe weitergeleitet. Die Weiterleitung an die übrigen Gruppenmitglieder der Gruppe kann dabei vorteilhafterweise automatisch von dem die Kommunikationsnachricht aussendenden mobilen Endgerät oder von der Leitstelle über das Mobilfunknetz an die mobilen Endgeräte der übrigen Gruppenmitglieder der Gruppe weitergeleitet werden. Vorteilhafterweise erfolgt die Weiterleitung entsprechender Kommunikationsnachrichten an die übrigen Gruppenmitglieder der Gruppe automatisch besonders bevorzugt mittels eines entsprechenden Anwendungsprogramms seitens des mobilen Endgerätes. Eine weitere vorteilhafte Ausgestaltung der Erfindung sieht vor, dass von der Leitstelle der Gruppe über das Mobilfunknetz eine Kommunikationsnachricht, vorzugsweise eine SMS oder eine MMS, gleichzeitig an die mobilen Endgeräte der Gruppenmitglieder der Gruppe übertragbar oder weiterleitbar ist. Durch diese erfindungsgemäßen Ausgestaltungen einzeln und/oder in Kombination ist eine weitere Steigerung des Funktions- und Anwendungsumfangs eines erfindungsgemäßen Kommunikationssystems für Gruppenkommunikationsanwendungen gegeben.

Eine weitere besonders vorteilhafte Ausgestaltung eines erfindungsgemäßen Kommunikationssystems ist gekennzeichnet durch mobile Endgeräte mit einer einen direkten Zugriff auf die übertragenen Datenbankeinträge ermöglichenden Einrichtung, vorzugsweise umfassend wenigstens einen Speicherbereich der durch Betätigung einer ausschließlich dazu vorgesehenen Eingabeeinrichtung des mobilen Endgerätes auslesbar und seitens des mobilen Endgerätes entsprechend aufbereitet wiedergebbar ist. Entsprechende erfindungsgemäße mobile Endgeräte eines erfindungsgemäßen Kommunikationssystems erlauben eine besonders einfache und sichere Bedienung durch entsprechende Gruppenmitglieder, insbesondere da ansonsten erforderliche aufwändige Bedienungseingaben zur erfindungsgemäßen Funktionsrealisierung bei entsprechender Ausgestaltung der mobilen Endgeräte entfallen können.

Zur Lösung der eingangs genannten Aufgabe wird mit der vorliegenden Erfindung ein Verfahren für Gruppenkommunikationsanwendungen, vorzugsweise im Bereich von Behörden und/oder Organisationen mit Sicherheitsaufgaben, mit einem Mobilfunknetz, vorzugsweise gemäß dem GSM-, GPRS- und/oder UMTS-Funknetzstandard, und darin betreibbaren mobilen Endgeräten, welche zumindest zu Gruppenkommunikationszwecken mobilfunknetzseitig zusammengefasst werden, wenigstens einer zentral verwalteten Datenbank mit wenigstens eine Information zur Kontaktierung von mobilen Endgeräten von möglichen Gruppenmitgliedern im Mobilfunknetz aufweisenden Datenbankeinträgen und wenigstens einer Leitstelle, in der Gruppenmitglieder zu einer Gruppe zusammengestellt und/oder koordiniert werden, vorgeschlagen, wobei zumindest im Rahmen der Zusammenstellung von Gruppenmitgliedern zu einer Gruppe die Leitstelle mit der Datenbank verbunden wird, die leitstellenseitige Zusammenstellung von Gruppenmitgliedern zu einer Gruppe eine mobilfunknetzseitige Zusammenfassung der mobilen Endgeräte der Gruppenmitglieder der Gruppe bewirkt und die leitstellenseitige Zusammenstellung von Gruppenmitgliedern zu einer Gruppe bewirkt, dass dem mobilen Endgerät zumindest eines Gruppenmitglieds der Gruppe zumindest ein Teil der Datenbankeinträge des mobilen Endgerätes wenigstens eines weiteren Gruppenmitglieds der Gruppe zur Verfügung gestellt wird.

Vorteilhafterweise wird der zumindest eine Teil der Datenbankeinträge des mobilen Endgerätes des wenigstens einen weiteren Gruppenmitglieds der Gruppe dem mobilen Endgerät des zumindest einen Gruppenmitglieds der Gruppe über das Mobilfunknetz übertragen und seitens des mobilen Endgerätes des zumindest einen Gruppenmitglieds der Gruppe gespeichert.

Vorteilhafterweise wird das erfindungsgemäße Verfahren in und/oder mit einem erfindungsgemäßen Kommunikationssystem genutzt.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

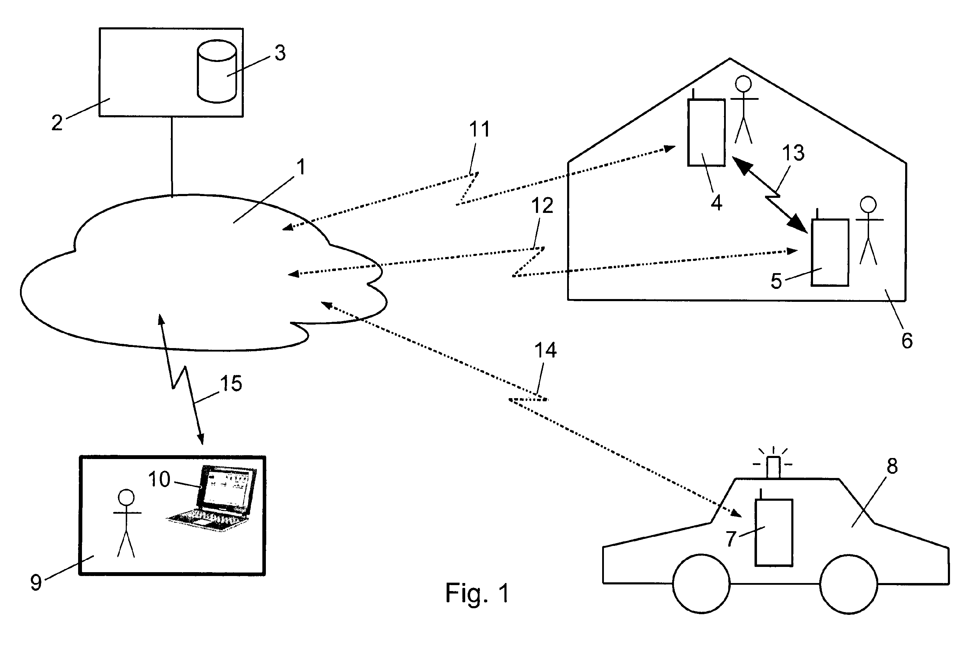

- Fig. 1: in einer schematischen Prinzipdarstellung ein Ausführungsbeispiel für ein erfindungsgemäßes Kommunikationssystem für Gruppenkommunikationsanwendungen.

Fig. 1 zeigt ein Kommunikationssystem für Gruppenkommunikationsanwendungen, welches vorliegend von mit der Wahrnehmung von Sicherheitsaufgaben beauftragten Behörden und/oder Organisationen genutzt wird. Das Kommunikationssystem besteht vorliegend aus einem Mobilfunknetz 1, welches vorliegend von einem Mobilfunknetzbetreiber 2 unterhalten wird. In dem Mobilfunknetz 1 sind mobile Endgeräte 4, 5 und 7, vorliegend nach Art von Mobilfunktelefonen, betreibbar. Das Mobilfunknetz 1 und die mobilen Endgeräte 4, 5 und 7 sind dabei gemäß dem GSM-, GPRS- und/oder UMTS-Funknetzstandard, dass heißt die mobilen Endgeräte 4, 5 und 7 sind entsprechend ausgebildet, aufgebaut und werden dementsprechend betreiben. Weiter weist das Kommunikationssystem für Gruppenkommunikationsanwendungen eine zentral verwaltete Datenbank 3 auf. In der Datenbank 3 sind dabei Datenbankeinträge von möglichen Gruppenmitgliedern einer Gruppe gespeichert, welche wenigstens eine Information zur Kontaktierung von mobilen Endgeräten von möglichen Gruppenmitgliedern im Mobilfunknetz umfassen. Die Datenbank 3 ist vorliegend zentral seitens des Mobilfunknetzbetreibers 2 verwaltet beziehungsweise über diesen erreichbar. Zum Kommunikationssystem gehört ferner wenigstens eine Leitstelle 9, welche zur Wahrnehmung von Sicherheitsaufgaben ihr zugeordnete Gruppen und deren Gruppenmitglieder koordiniert und leitet. Dabei erfolgt seitens der Leitstelle 9 eine entsprechende Zusammenstellung von Gruppenmitgliedern zu einer Gruppe. Zur Zusammenstellung und/oder Koordination von Gruppenmitgliedern einer Gruppe weist die Leitstelle 9 von entsprechendem Bedienpersonal genutzte Einrichtungen 10 auf, in Fig. 1 symbolisch durch eine Recheneinrichtung 10 in Form eines Personalcomputers dargestellt.

Im Rahmen der Zusammenstellung von Gruppenmitgliedern zu einer Gruppe wird die Leitstelle 9 vorliegend über das Mobilfunknetz 1 im Rahmen einer entsprechenden Mobilfunknetzverbindung 15 mit der seitens des Mobilfunknetzbetreibers 2 unterhaltenden Datenbank 3 verbunden. Die Zusammenstellung der Gruppenmitglieder wird dabei seitens der Recheneinrichtung 10 entsprechend den jeweiligen Anforderungen für Sicherheitsaufgaben und/oder der Qualifikation sowie der Verfügbarkeit von entsprechendem Sicherheitspersonal zusammengestellt. Im Rahmen der Zusammenstellung werden dabei aus der Datenbank 3 entsprechende Informationen der Gruppenmitglieder, vorzugsweise der zu einer Gruppe zusammenzustellenden Gruppenmitglieder, abgerufen. Dabei bewirkt die leitstellenseitige Zusammenstellung der Gruppenmitglieder zu einer Gruppe mobilfunknetzseitig eine Zusammenfassung der mobilen Endgeräte zu einer Gruppe für Gruppenkommunikationsanwendungen. Vorliegend sind dabei von der Leitstelle 9 beziehungsweise entsprechendem Bedienpersonal unter Nutzung der Recheneinrichtung 10 der Leitstelle 9 die die mobilen Endgeräte 4, 5 und 7 nutzenden Personen für einen bestimmten Einsatzzweck zu einer Gruppe zusammengefasst. Die die mobilen Endgeräte 4 und 5 nutzenden Gruppenmitglieder befinden sich dabei vorliegend in einem zu überwachenden Gebäude 6, während sich das das mobile Endgerät 7 nutzende Gruppenmitglied in einem Einsatzwagen 8 befindet. Die mobilfunknetzseitige Zusammenfassung der mobilen Endgeräte 4, 5 und 7 erfolgt dabei über das Mobilfunknetz 1, welches Gruppenkommunikationsanwendungen entsprechend der mobilfunknetzseitigen Zusammenstellung über die in Fig. 1 mit 11, 12 und 14 symbolisch dargestellten Mobilfunknetzverbindungen zwischen dem Mobilfunknetz 1 und den mobilen Endgeräten 4, 5 und 7 beziehungsweise der Leitstelle 9 und dem Mobilfunknetz über die symbolisch dargestellte Mobilfunknetzverbindung 15 bereitstellt.

Die die mobilen Endgeräte 4 und 5 nutzenden Gruppenmitglieder der Gruppe, vorliegend die sich in dem Gebäude 6 befindenden und mit Sicherheitsaufgaben beauftragten Personen, können dabei unabhängig von einer über das Mobilfunknetz 1 erfolgenden Kommunikation unter Nutzung der Mobilfunknetzverbindungen 11 beziehungsweise 12 eine direkte Kommunikation über die in Fig. 1 mit 13 gekennzeichnete Direktverbindung vornehmen. Eine entsprechende Direktverbindung erlaubt dabei eine Gruppenkommunikation zwischen den mobilen Endgeräten 4 und 5. Die mobilen Endgeräte 4, 5 und 7 sind für eine derartige Direktkommunikation entsprechend ausgebildet, dass heißt zusätzlich zu einer Ausbildung für einen Betrieb in einem Mobilfunknetz gemäß dem GSM-, GPRS- und/oder UMTS-Funknetzstandard.

Erfindungsgemäß bewirkt eine leitstellenseitige Zusammenstellung von Gruppenmitgliedern zu einer Gruppe, vorliegend der Nutzer der mobilen Endgeräte 4, 5 und 7, dass den mobilen Endgeräten 4, 5 und 7 der Gruppenmitgliedern der Gruppe zumindest ein Teil der Datenbankeinträge der übrigen Gruppenmitglieder zur Verfügung gestellt werden. Die Datenbankeinträge der zu einer Gruppe zusammengestellten Gruppenmitglieder werden dabei aus der seitens des Mobilfunknetzbetreibers 2 unterhaltenen Datenbank 3 entsprechend der leitstellenseitig erfolgenden Zusammenstellung über das Mobilfunknetz 1, vorliegend über die symbolisch dargestellten Kommunikationsverbindungen 11, 12 und 14 an die mobilen Endgeräte 4, 5 und 7 übertragen und seitens derselben entsprechend zur weitergehenden Nutzung gespeichert. Dabei werden im Rahmen der Zusammenstellung die entsprechenden Datenbankeinträge aus der Datenbank 3 automatisch auf die mobilen Endgeräte 4, 5 und 7 übertragen und gespeichert. Die Datenbankeinträge umfassen vorliegend insbesondere Informationen hinsichtlich einer Kontaktierung der mobilen Endgeräte 4, 5 beziehungsweise 7 der Gruppenmitglieder einer Gruppe im Mobilfunknetz 1, vorliegend in Form der sogenannten MSISDN, als auch Informationen hinsichtlich der Funktion, dem Status, dem Rang und/oder dergleichen personenspezifische Informationen des jeweiligen Gruppenmitglieds. Darüber hinaus werden mit den Datenbankeinträgen an die mobilen Endgeräte 4, 5 und 7 über die Kommunikationsverbindungen 11, 12 und 14 weitergehende Informationen hinsichtlich der zuständigen Leitstelle 9 beziehungsweise deren Erreichbarkeit über das Mobilfunknetz 1 als auch weitergehende Informationen hinsichtlich des wahrzunehmenden beziehungsweise auszuführenden Einsatzes übertragen.

Das in der Figur der Zeichnung dargestellte Ausführungsbeispiel der Erfindung dient lediglich einer Erläuterung der Erfindung und ist für diese nicht beschränkend.

### Bezugiszeichenliste

- 1: Mobilfunknetz
- 2: Mobilfunknetzbetreiber (Mobilfunknetz (1))
- **3**: Datenbank (Datenbankeinträge von Gruppenmitgliedern)
- **4**: mobiles Endgerät/Mobilfunktelefon (Gruppenmitglied einer Gruppe)
- **5**: mobiles Endgerät/Mobilfunktelefon (Gruppenmitglied einer Gruppe)
- 6: Gebäude (Einsatzort)
- 7: mobiles Endgerät/Mobilfunktelefon (Gruppenmitglied einer Gruppe)
- 8: Kraftfahrzeug (Einsatzwagen)
- 9: Leitstelle
- 10: Recheneinrichtung (Leitstelle (9))
- 11: Kommunikationsverbindung (Mobilfunknetz (1))
- 12: Kommunikationsverbindung (Mobilfunknetz (1))
- 13: Kommunikationsverbindung (Direktkommunikation unter beziehungsweise zwischen Gruppenmitgliedern)
- 14: Kommunikationsverbindung (Mobilfunknetz (1))
- 15.: Kommunikationsverbindung (Mobilfunknetz (1))

## Patentansprüche

1. Kommunikationssystem für Gruppenkommunikationsanwendungen, vorzugsweise im Bereich von Behörden und/oder Organisationen mit Sicherheitsaufgaben, mit
einem Mobilfunknetz (1), vorzugsweise gemäß dem GSM-, GPRS- und/oder UMTS-Funknetzstandard, und darin betreibbaren mobilen Endgeräten (4, 5, 7), welche zumindest zu Gruppenkommunikationszwecken mobilfunknetzseitig zusammenfassbar sind,
wenigstens einer zentral verwalteten Datenbank (3) mit wenigstens eine Information zur Kontaktierung von mobilen Endgeräten (4, 5, 7) von möglichen Gruppenmitgliedern im Mobilfunknetz (1) aufweisenden Datenbankeinträgen und
wenigstens einer Leitstelle (9) zur Zusammenstellung und/oder Koordination von Gruppenmitgliedern zu einer Gruppe,
**dadurch gekennzeichnet,**
**dass**
die Leitstelle (9) zumindest im Rahmen der Zusammenstellung von Gruppenmitgliedern zu einer Gruppe mit der Datenbank (3) verbindbar ist,
eine leitstellenseitige Zusammenstellung von Gruppenmitgliedern zu einer Gruppe eine mobilfunknetzseitige Zusammenfassung der mobilen Endgeräte (4, 5, 7) der Gruppenmitglieder der Gruppe bewirkt und
eine leitstellenseitige Zusammenstellung von Gruppenmitgliedern zu einer Gruppe bewirkt, dass dem mobilen Endgerät (4, 5, 7) zumindest eines Gruppenmitglieds der Gruppe zumindest ein Teil der Datenbankeinträge des mobilen Endgerätes (4, 5, 7) wenigstens eines weiteren Gruppenmitglieds der Gruppe zur Verfügung gestellt wird.

2. Kommunikationssystem nach Anspruch 1, **dadurch gekennzeichnet, dass** die zur Verfügungsstellung des zumindest einen Teils der Datenbankeinträge des mobilen Endgerätes (4, 5, 7) des wenigstens einen weiteren Gruppenmitglieds der Gruppe dem mobilen Endgerät (4, 5, 7) des zumindest einen Gruppenmitglieds der Gruppe durch über das Mobilfunknetz (1) erfolgende Übertragung des zumindest einen Teils der Datenbankeinträge des mobilen Endgerätes (4, 5, 7) des wenigstens einen weiteren Gruppenmitglieds der Gruppe an das mobile Endgerät (4, 5, 7) des zumindest einen Gruppenmitglieds der Gruppe und Speicherung seitens des mobilen Endgerätes (4, 5, 7) des zumindest einen Gruppenmitglieds der Gruppe erfolgt.

3. Kommunikationssystem nach Anspruch 1 oder Anspruch 2, **dadurch gekennzeichnet, dass** die vorzugsweise durch Übertragung und/oder Speicherung des zumindest einen Teils der Datenbankeinträge des mobilen Endgerätes (4, 5, 7) des wenigstens einen weiteren Gruppenmitglieds der Gruppe erfolgende zur Verfügungsstellung des zumindest einen Teils der Datenbankeinträge des mobilen Endgerätes (4, 5, 7) des wenigstens einen weiteren Gruppenmitglieds der Gruppe durch die Leitstelle initiiert wird.

4. Kommunikationssystem nach Anspruch 2 oder Anspruch 3, **dadurch gekennzeichnet, dass** die Übertragung und/oder Speicherung der Datenbankeinträge automatisch erfolgt.

5. Kommunikationssystem nach einem der Ansprüche 1 bis 4, **dadurch gekennzeichnet, dass** die Information zur Kontaktierung von mobilen Endgeräten von Gruppenmitgliedern im Mobilfunknetz (1) die Mobilfunknetzrufnummer (MSISDN) ist.

6. Kommunikationssystem nach einem der Ansprüche 1 bis 5, **dadurch gekennzeichnet, dass** die Datenbankeinträge neben der wenigstens einen Information zur Kontaktierung von mobilen Endgeräten (4, 5, 7) von möglichen Gruppenmitgliedern im Mobilfunknetz (1) wenigstens eine Funktions- und/oder Statusinformation des jeweiligen möglichen Gruppenmitglieds umfassen.

7. Kommunikationssystem nach einem der Ansprüche 1 bis 6, **dadurch gekennzeichnet, dass** der dem mobilen Endgerät (4, 5, 7) des zumindest einen Gruppenmitglieds der Gruppe zumindest zur Verfügung gestellte Teil der Datenbankeinträge des mobilen Endgerätes (4, 5, 7) des wenigstens einen weiteren Gruppenmitglieds der Gruppe wenigstens eine Information der Gruppe, eine Information der Leitstelle der Gruppe und/oder eine Information zur Kontaktierung der Leitstelle (9) der Gruppe umfasst.

8. Kommunikationssystem nach einem der Ansprüche 1 bis 7, **dadurch gekennzeichnet, dass** zusätzlich zu dem dem mobilen Endgerät (4, 5, 7) des zumindest einen Gruppenmitglieds der Gruppe zumindest zur Verfügung gestellten Teils der Datenbankeinträge des mobilen Endgerätes (4, 5, 7) des wenigstens einen weiteren Gruppenmitglieds der Gruppe dem mobilen Endgerät (4, 5, 7) des zumindest einen Gruppenmitglieds der Gruppe zusätzlich wenigstens eine Information der Gruppe, eine Information der Leitstelle (9) der Gruppe und/oder eine Information zur Kontaktierung der Leitstelle (9) der Gruppe zur Verfügung gestellt wird, vorzugsweise von der Leitstelle (9).

9. Kommunikationssystem nach einem der Ansprüche 1 bis 8, **dadurch gekennzeichnet, dass** zumindest bei seitens eines Gruppenmitglieds der Gruppe eingehendem Anruf eines weiteren Gruppenmitglieds der Gruppe zumindest ein Teil des Datenbankeintrags des anrufenden Gruppenmitglieds der Gruppe wiedergegeben wird.

10. Kommunikationssystem nach einem der Ansprüche 1 bis 9, **dadurch gekennzeichnet, dass** eine von einem mobilen Endgerät (4, 5, 7) eines Gruppenmitglieds einer Gruppe über das Mobilfunknetz an die Leitstelle der Gruppe gesendete Kommunikationsnachricht, vorzugsweise eine SMS oder eine MMS, über das Mobilfunknetz (1) an die mobilen Endgeräte (4, 5, 7) der übrigen Gruppenmitglieder der Gruppe weitergeleitet wird.

11. Kommunikationssystem nach einem der Ansprüche 1 bis 10, **dadurch gekennzeichnet, dass** von der Leitstelle (9) der Gruppe über das Mobilfunknetz (1) eine Kommunikationsnachricht, vorzugsweise eine SMS oder eine MMS, gleichzeitig an die mobilen Endgeräte (4, 5, 7) der Gruppenmitglieder der Gruppe übertragbar oder weiterleitbar ist.

12. Kommunikationssystem nach einem der Ansprüche 1 bis 11, **gekennzeichnet durch** mobile Endgeräte (4, 5, 7) mit einer einen direkten Zugriff auf die übertragenen Datenbankeinträge ermöglichenden Einrichtung, vorzugsweise umfassend wenigstens einen Speicherbereich der **durch** Betätigung einer ausschließlich dazu vorgesehenen Eingabeeinrichtung des mobilen Endgerätes (4, 5, 7) auslesbar und seitens des mobilen Endgerätes (4, 5, 7) entsprechend aufbereitet wiedergebbar ist.

13. Verfahren für Gruppenkommunikationsanwendungen, vorzugsweise im Bereich von Behörden und/oder Organisationen mit Sicherheitsaufgaben,
mit
einem Mobilfunknetz (1), vorzugsweise gemäß dem GSM-, GPRS- und/oder UMTS-Funknetzstandard, und darin betreibbaren mobilen Endgeräten (4, 5, 7), welche zumindest zu Gruppenkommunikationszwecken mobilfunknetzseitig zusammengefasst werden,
wenigstens einer zentral verwalteten Datenbank (3) mit wenigstens eine Information zur Kontaktierung von mobilen Endgeräten (4, 5, 7) von möglichen Gruppenmitgliedern im Mobilfunknetz (1) aufweisenden Datenbankeinträgen und
wenigstens einer Leitstelle (9), in der Gruppenmitglieder zu einer Gruppe zusammengestellt und/oder koordiniert werden,
**dadurch gekennzeichnet,**
**dass**
zumindest im Rahmen der Zusammenstellung von Gruppenmitgliedern zu einer Gruppe die Leitstelle (9) mit der Datenbank (3) verbunden wird,
die leitstellenseitige Zusammenstellung von Gruppenmitgliedern zu einer Gruppe eine mobilfunknetzseitige Zusammenfassung der mobilen Endgeräte (4, 5, 7) der Gruppenmitglieder der Gruppe bewirkt und
die leitstellenseitige Zusammenstellung von Gruppenmitgliedern zu einer Gruppe bewirkt, dass dem mobilen Endgerät (4, 5, 7) zumindest eines Gruppenmitglieds der Gruppe zumindest ein Teil der Datenbankeinträge des mobilen Endgerätes (4, 5, 7) wenigstens eines weiteren Gruppenmitglieds der Gruppe zur Verfügung gestellt wird.

14. Verfahren nach Anspruch 13, **dadurch gekennzeichnet, dass** der zumindest eine Teil der Datenbankeinträge des mobilen Endgerätes (4, 5, 7) des wenigstens einen weiteren Gruppenmitglieds der Gruppe dem mobilen Endgerät (4, 5, 7) des zumindest einen Gruppenmitglieds der Gruppe über das Mobilfunknetz (1) übertragen und seitens des mobilen Endgerätes (4, 5, 7) des zumindest einen Gruppenmitglieds der Gruppe gespeichert wird.

15. Verfahren nach Anspruch 13 oder Anspruch 14, **dadurch gekennzeichnet, dass** dieses in und/oder mit einem Kommunikationssystem nach einem der Ansprüche 1 bis 12 genutzt wird.
